# EUROPEAN PATENT APPLICATION

(11) **EP 2 364 900 A2**
(43) Date of publication of application: **14.09.2011**
(21) Application number: 11002096.3
(22) Date of filing: 14.03.2011
(51) Int. Cl.: B62H 3/08

(54) **Cycle stand**

(30) Priority: 12.03.2010 GB 1004077
(71) Applicant: Cyclepods Limited, Hortons Way Westerham Kent TN16 1BT (GB)
(72) Inventor: Steward, James, Westerham Kent TN16 1BT (GB)
(74) Representative: Hutchins, Michael Richard

(57) **Abstract**

The invention provides a cycle stand comprising:
a body (2) having at least one pocket (8,10) for receiving a wheel of a bicycle, the pocket (8,10) being of a depth and configuration such that a wheel of 370 mm radius or less can be inserted into the pocket to a depth greater than the radius of the wheel, thereby to prevent or restrict access to a hub of the wheel;
mounting means (20, 22, 24, 26)) for securing the body to an underlying substrate; and an anchoring member (40) to which the bicycle may be secured by means of a locking device;
the anchoring member (40) being positioned such that when the bicycle is secured thereto by means of a locking device, withdrawal of the bicycle wheel from the pocket (8,10) is prevented.

## Description

This invention relates to a cycle stand and in particular a cycle stand that provides enhanced security against theft.

### Background of the Invention

It is well known to provide cycle racks or cycle stands in public places so that cyclists can store or park their bicycles. Cycle racks or cycle stands in common use typically comprise an open framework to which the front wheel of the bicycle may be attached. In many cases, in order to reduce the footprint of the cycle stand and save space, the rack may support the front wheel of the bicycle in an elevated position.

Although most cycle racks in common use have some form of rail or bar to which a bicycle can be padlocked, such bicycle stands typically offer little protection against theft of the bicycle, or major parts such as the wheels. In order to provide protection against theft of the bicycle wheels, it is often necessary to use two padlocks, one for each wheel.

### Summary of the Invention

The invention provides a cycle stand to which a bicycle can be attached in a more secure manner than conventional cycle stands.

Accordingly, in a first aspect, the invention provides a cycle stand comprising:
a body having at least one pocket for receiving a wheel of a bicycle, the pocket being of a depth and configuration such that a wheel of 370 mm radius or less can be inserted into the pocket to a depth greater than the radius of the wheel, thereby to prevent or restrict access to a hub of the wheel;
mounting means for securing the body to an underlying substrate; and
an anchoring member to which the bicycle may be secured by means of a locking device;
the anchoring member being positioned such that when the bicycle is secured thereto by means of a locking device, withdrawal of the bicycle wheel from the pocket is prevented.

The body has at least one pocket for receiving a wheel of a bicycle, the pocket being of a depth and configuration such that a front wheel of 370 mm radius or less can be inserted into the pocket to a depth greater than the radius of the wheel. Thus the pocket is sized so as to be able to accommodate bicycle wheels of all the commonly used wheel diameters. References to wheel diameters and wheel radii as used herein refer to the diameter or radius of the complete wheel assembly, i.e. including the tyre.

For example, an average 29-inch mountain bike tyre (one of the larger tyre sizes in common use) has an outside diameter of about 28.5" (724 mm) which corresponds to a radius of 362mm. A wheel and tyre of this size can readily be accommodated within the pocket of the cycle stand. The majority of bicycle wheels (with tyres attached) have a radius of less than 362mm. Typical standard wheel and tyre sizes are as set out in International Standards, see ISO 559 and ISO 622.

Because the wheel can be inserted into the pocket to a depth greater than the radius of the wheel, the axle and the greater part if not all of the hub are located within the pocket and therefore access to the wheel hub and axle is prevented or at least restricted. This means that it is difficult or impossible to insert tools into the pocket alongside the wheel in order to remove the wheel from the wheel forks. An advantage of this arrangement, therefore, is that only one padlock (passing through the rear wheel, frame and anchoring member) is needed to secure the bicycle frame and wheel in place.

The wheel accommodated by the pocket may be the front wheel of the bicycle or the rear wheel but typically the pocket is configured to receive the front wheel.

The body can be formed from a variety of different materials such as metal and plastics materials. For example, the body can be fabricated from metal. However, it is preferred that the body is formed from plastics materials such as medium density polyethylene or polypropylene, and in particular recycled plastics materials. A preferred plastics material is medium density polyethylene.

The body may be formed from a plastics material and may be hollow. Preferably it is formed by rotational moulding.

The body may have a rail mounted thereon or therein. The anchoring member can form part of, or be attached to, the rail. Typically the rail has two ends, both of which pass through the body. The two ends of the rail are preferably provided with means for securing them to the underlying substrate. For example, the two ends of the rail may be provided with flanges or plates through which bolts or other anchoring elements may be inserted to fasten the rail to the underlying substrate. When the body is formed from a moulded plastics material, the two ends of the rail may extend through a pair of holes in the body. The rail can take a variety of shapes. In one embodiment, the rail is substantially arc-shaped.

The body of the cycle stand can comprise a base portion on or in which the rail is mounted, and a portion defining one or more pockets. In one embodiment, the body is provided with two pockets arranged side by side for receiving a wheel of each of two bicycles. Typically, one pocket is elevated relative to the other pocket.

In use, the rail is positioned between the two bicycles so that both can be secured to the rail or the anchoring member connected thereto.

The or each pocket may have upper and lower narrower regions for accommodating the rim of the bicycle wheel and an intermediate wider region for accommodating the hub of a bicycle wheel.

The narrower regions may have a width slightly larger than the width of a bicycle rim or tyre.

The intermediate wider regions are sized so as to accommodate the wheel hub and any protruding elements (e.g. release levers, reflectors or lamps) that may be mounted on the wheel hub or forks (e.g. front forks) of the bicycle.

The wider regions are of a width such that it is difficult or impossible to get tools into the pocket to undo the wheel nut or release levers and remove the wheel.

The body has mounting means for securing the body to an underlying substrate. The mounting means can take form of mounting holes in the body for accommodating bolts or other fastening elements for securing the body to an underlying substrate.

The underlying substrate may be concrete or paving or a tarmac surface, or may be compacted earth.

In one preferred embodiment, the cycle stand comprises a body formed from a moulded plastics material, the body having a base portion and an end portion configured to form a pair of side by side pockets for receiving a wheel of each of a pair of bicycles, each pocket being of a depth and configuration such that a wheel of 365 mm radius or less can be inserted into the pocket to a depth greater than the radius of the wheel, thereby to prevent or restrict access to a hub of the wheel; and a rail mounted in the base portion of the body, two ends of the rail passing through a pair of holes in the body; the rail in use being positioned between the two bicycles, wherein an intermediate portion of the rail defines the anchoring member to which each bicycle may be secured by means of a locking device or devices.

The body of the cycle stand may have one or more panels thereon for displaying advertising materials. For example, a rear surface or side of the body may bear one or more advertising panels.

As an alternative (or in addition) to advertising panels, the body of the cycle stand may have one or more electronic display panels thereon. The electronic display panels may display advertising or public information. Electrical power for the display panels may be provided by battery or local electrical connections but preferably is provided by means of one or more solar power cells.

In another aspect, the invention provides a cycle stand as defined herein having a bicycle mounted thereon.

Further aspects and embodiments of the invention will be apparent from the specific description set out below.

### Brief Description of the Drawings

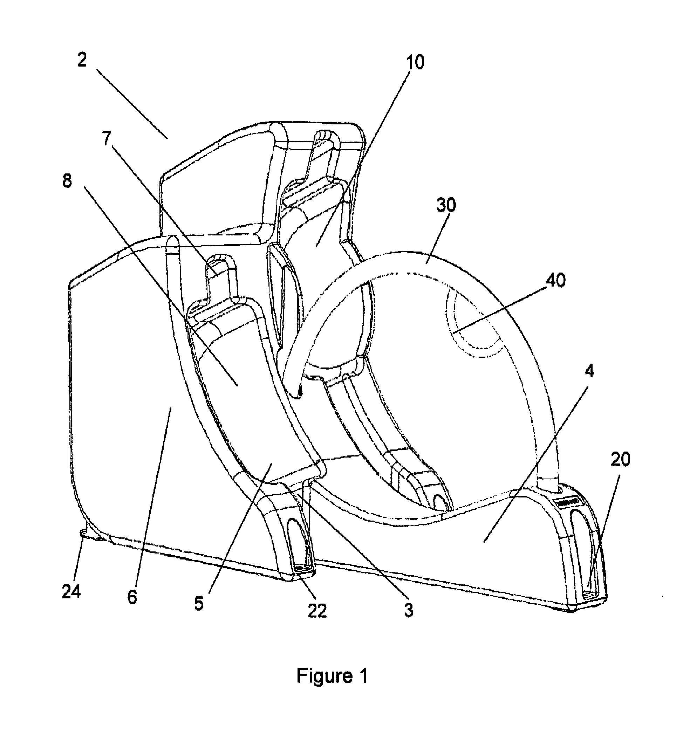

Figure 1 is a perspective view of a cycle stand according to a first embodiment of the invention.

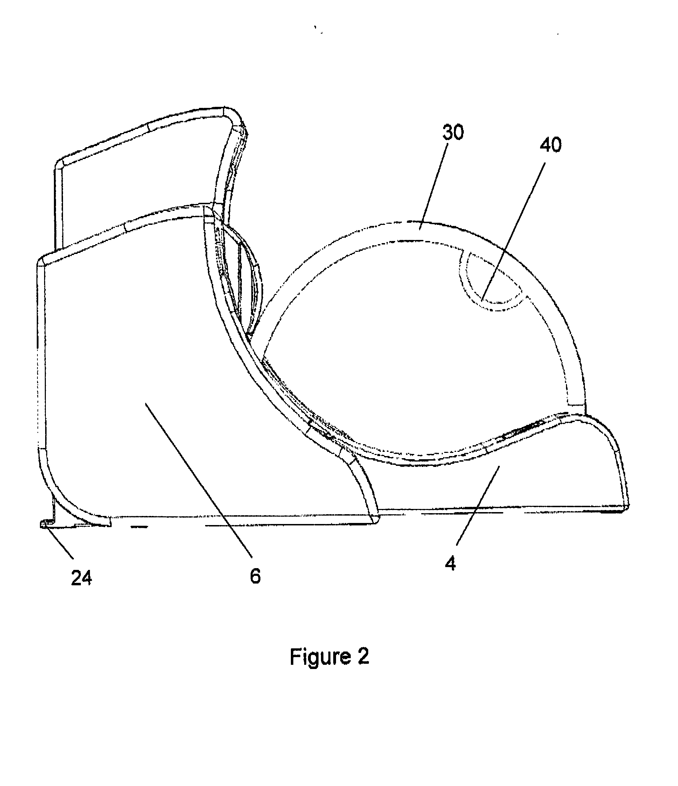

Figure 2 is a side view of the cycle stand of Figure 1.

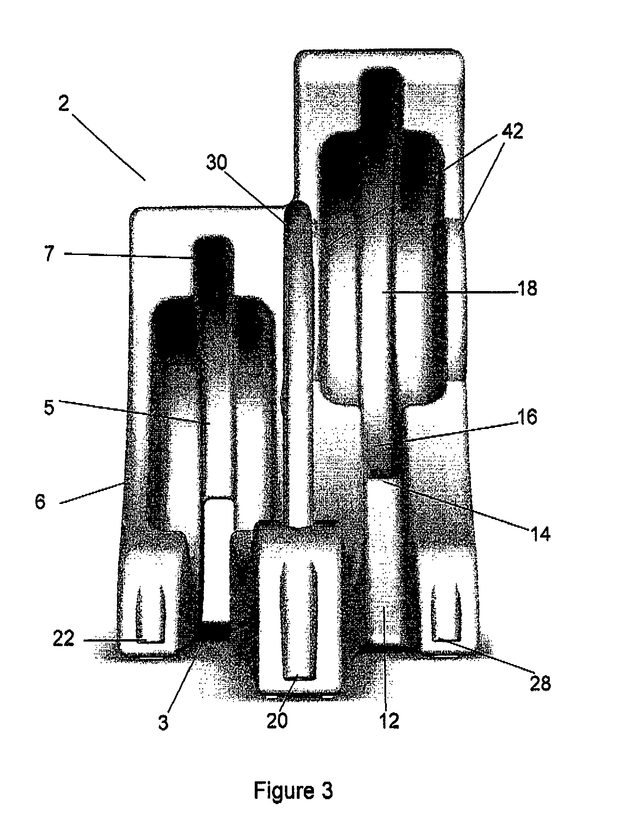

Figure 3 is a front view of the cycle stand of Figure 1.

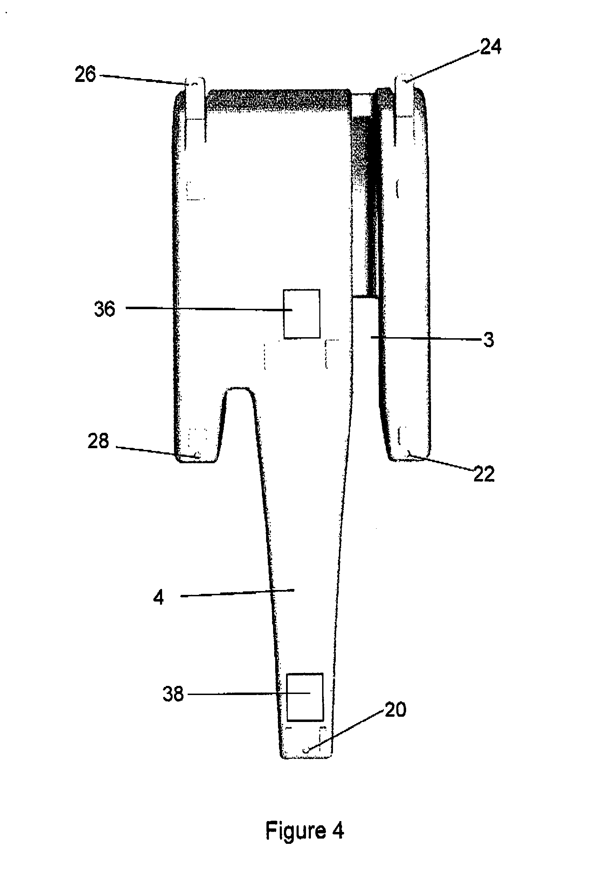

Figure 4 is a view from below of the cycle stand of Figure 1.
Figure 5 is a rear view of the cycle stand of Figure 1.
Figure 6 is a side view of the cycle stand of Figure 1 with a bicycle mounted in the nearside bay of the stand.
Figure 7 is a side view of the cycle stand of Figure 1 with a bicycle mounted in the far side bay of the stand.
Figure 8 is a perspective view of the cycle stand of Figure 1 with a bicycle mounted in the nearside bay of the stand.

### Detailed Description of the Invention

The invention will now be illustrated, but not limited, by reference to the specific embodiments shown in the accompanying drawings.

A cycle stand according to a first embodiment of the invention comprises a body 2 formed by rotational moulding from a plastics material such as medium density polyethylene. The plastics material may be a recycled material.

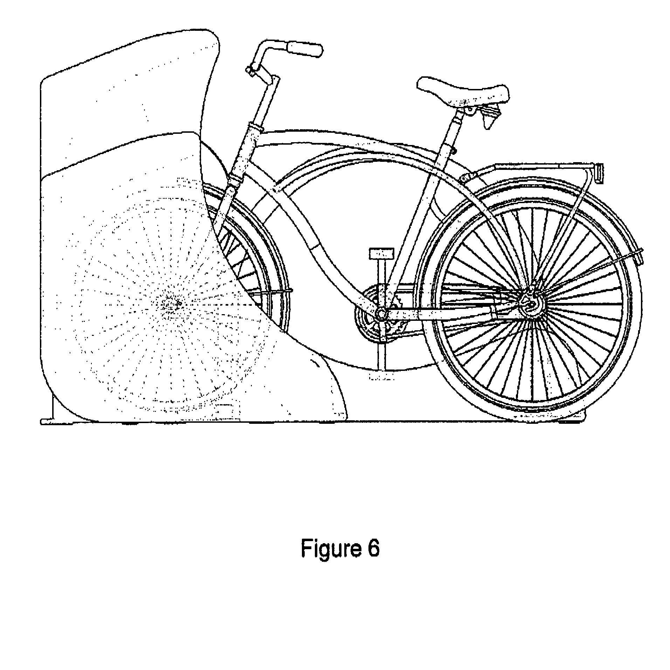

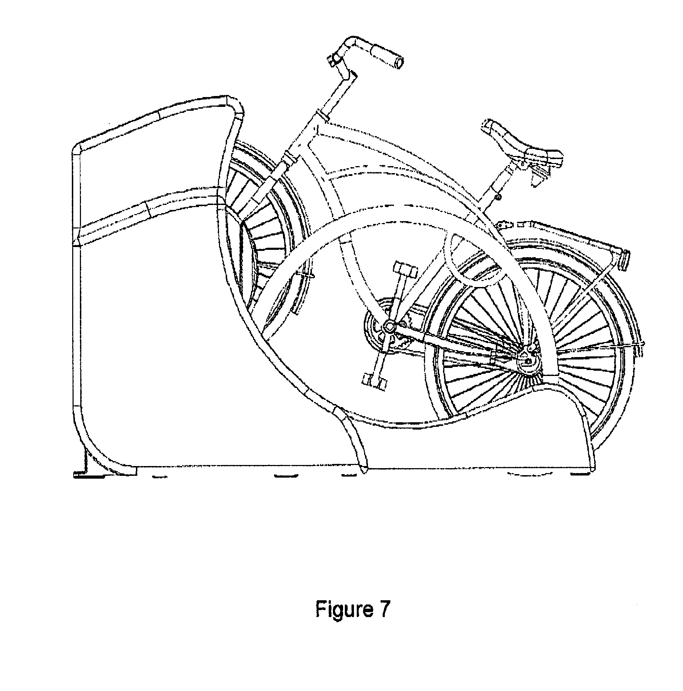

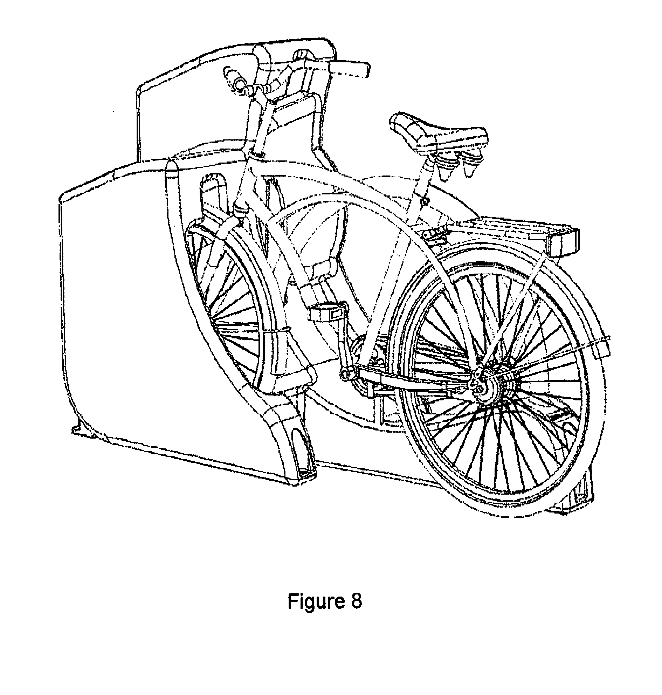

The body 2 has an elongate horizontally extending base portion 4 and an upright portion 6 which has two moulded bays or pockets 8,10 each of which is shaped to receive a wheel of a bicycle. In Figures 6, 7 and 8, the pocket is shown accommodating the front wheel of a bicycle.

The left hand (nearside) bay or pocket 8 is part circular when viewed from the side and is open at the bottom by virtue of a relatively narrow slot 3 which is sufficiently wide to take a bicycle wheel.

Above the slot 3, the pocket opens out to provide a wider region 5 that can accommodate wheel hubs and their associated nuts and release levers, or fixtures such as lamps or reflectors mounted on the fork of the bicycle.

Above, the wider region 5 is a second narrower region 7 which corresponds approximately in width to the lower narrower region 3. The upper narrower region 7 accommodates the top of a wheel of the bicycle.

The wheel (e.g. front wheel) of a bicycle can be inserted into the slot 3 of the pocket 8 so that the wheel rests on the ground. The depth of the pocket 8 is such that it can accommodate all of the standard wheel sizes currently in use. Consequently, the bicycle wheel can be inserted into the pocket to a depth greater than the radius of the wheel and this in turn means that the axle and preferably the entire wheel hub are within the pocket. Because the pocket is also of restricted width, it is difficult or impossible for a tool to be inserted into the gap between the pocket wall and wheel to undo the wheel nut or wheel release lever. In this way, theft of the wheel is prevented.

The right hand (far side) pocket 10 is also part circular when viewed from the side and is raised with respect to the left hand pocket. The pocket 10 has an entrance ramp 12 leading to a lip 14, the other side of which is a curved wheel-supporting surface 16. As with the nearside pocket, the far side pocket widens out above the wheel-supporting surface to provide a wider space 18 that can accommodate wheel hubs and their associated nuts and release levers, or fixtures such as lamps or reflectors mounted on a fork of the bicycle. The side walls 42 of the far side pocket 10 are bowed outwardly so as to cover a greater area of the wheel and restrict or prevent access to the wheel hub and wheel nuts.

The plastics body 2 is provided with a plurality of anchoring points 20, 22, 24, 26 and 28 through which anchoring bolts or other securing elements can be inserted to secure the body to an underlying substrate such as a paved area or concrete base.

The cycle stand has a curved rail 30 formed from a metal such as stainless steel. The two ends of the rail extend through holes in the body 4 and terminate in feet 36, 38 each of which comprise a rectangular flange or fastening plate through which bolts (not shown) are located to anchor the feet in an underlying substrate (e.g. a concrete base).

A loop of metal 40 is welded to an underside of the rail 30. The loop 40 acts as an anchoring member to which the bicycle may be secured by means of a locking device such as a chain and padlock or combination lock. By passing the chain through the loop and then through the rear wheel and frame of the bicycle, the bicycle is locked in place and cannot be pulled out of the pocket or bay 8,10. The loop 40 prevents the chain from sliding along the rail 30.

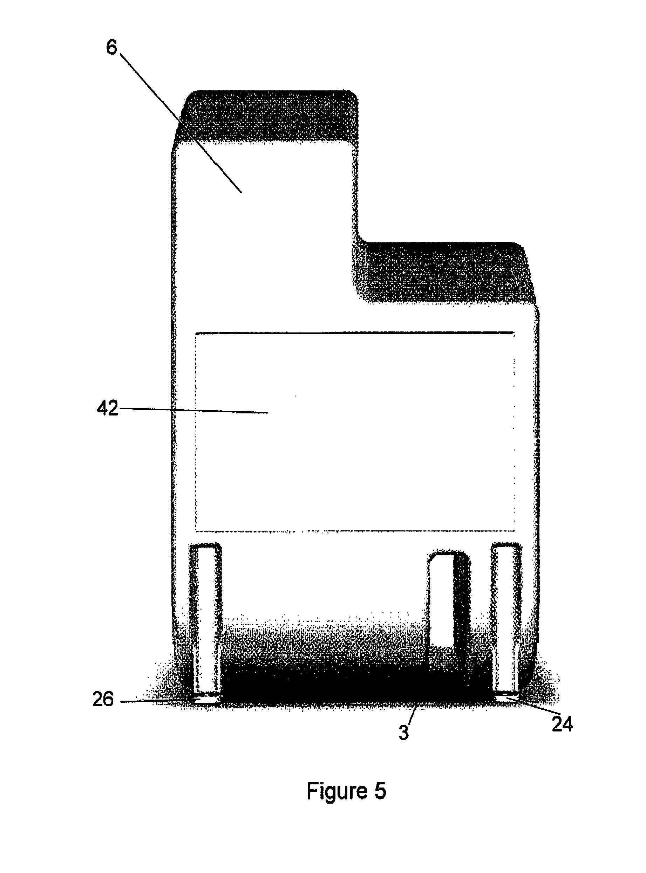

Figure 5 is a rear view of the body 2. The rear surface of the body has a rectangular recessed area 42 which can be used to carry advertising material. Alternatively, the area 42 may carry a flat panel electronic display for showing advertising or public information materials. Because the body of the cycle stand is hollow, any associated electronics can be concealed within the body. Power for the display can be provided by means of a battery, a connection to a local electricity supply, or (most preferably) by means of a solar panel (not shown) mounted on the body.

### Equivalents

It will readily be apparent that numerous modifications and alterations may be made to the specific embodiments of the invention described above without departing from the principles underlying the invention. All such modifications and alterations are intended to be embraced by this application.

## Claims

1. A cycle stand comprising:
a body having at least one pocket for receiving a wheel of a bicycle, the pocket being of a depth and configuration such that a front wheel of 370 mm radius or less can be inserted into the pocket to a depth greater than the radius of the wheel, thereby to prevent or restrict access to a hub of the wheel;
mounting means for securing the body to an underlying substrate; and
an anchoring member to which the bicycle may be secured by means of a locking device;
the anchoring member being positioned such that when the bicycle is secured thereto by means of a locking device, withdrawal of the bicycle wheel from the pocket is prevented.

2. A cycle stand according to claim 1 wherein the body is formed from a moulded plastics material.

3. A cycle stand according to claim 1 or claim 2 wherein the body has a rail mounted thereon, the anchoring member forming part of, or being attached to, the rail, and wherein the rail has two ends, both of which pass through the body.

4. A cycle stand according to claim 3 wherein the two ends of the rail are provided with means for securing them to the underlying substrate.

5. A cycle stand according to claim 3 or claim 4 wherein the body is formed from a moulded plastics material and the two ends of the rail extend through a pair of holes in the body.

6. A cycle stand according to any one of claims 3 to 5 wherein the rail is substantially arc-shaped.

7. A cycle stand according to any one of claims 3 to 6 wherein the body comprises a base portion on or in which the rail is mounted, and a portion defining the pocket.

8. A cycle stand according to any one of the preceding claims wherein the body is provided with two pockets arranged side by side for receiving a wheel of each of two bicycles.

9. A cycle stand according to claim 8 wherein one pocket is elevated relative to the other pocket.

10. A cycle stand according to any one of the preceding claims wherein the or each pocket has upper and lower narrower regions for accommodating the rim of the bicycle wheel and an intermediate wider region for accommodating the hub of a bicycle wheel.

11. A cycle stand according to claim 1 comprising a body formed from a moulded plastics material, the body having a base portion and an end portion configured to form a pair of side by side pockets for receiving a wheel of each of a pair of bicycles, each pocket being of a depth and configuration such that a front wheel of 365 mm radius or less can be inserted into the pocket to a depth greater than the radius of the wheel, thereby to prevent or restrict access to a hub of the wheel; and a rail mounted in the base portion of the body, two ends of the rail passing through a pair of holes in the body: the rail in use being positioned between the two bicycles, wherein an intermediate portion of the rail defines the anchoring member to which each bicycle may be secured by means of a locking device or devices.

12. A cycle stand according to any one of the preceding claims wherein the body has one or more panels thereon for displaying advertising materials.

13. A cycle stand according to any one of the preceding claims wherein the body has one or more electronic display panels thereon.

14. A cycle stand according to claim 13 which comprises one of more solar power cells for providing electrical power to the display panel(s).

15. A cycle stand according to any one of the preceding claims having a bicycle attached thereto.
